# EUROPÄISCHE PATENTSCHRIFT

(11) **EP 1 253 006 B1**
(45) Veröffentlichungstag und Bekanntmachung des Hinweises auf die Patenterteilung: **22.09.2004**
(21) Anmeldenummer: 02006340.0
(22) Anmeldetag: 21.03.2002
(51) Int. Cl.: B32B 27/40, B32B 27/04, B32B 5/28

(54) **Verbundbauteile aus faserverstärktem Polyurethan und deren Verwendung in Karosserieaussenteilen**
Composite materials made from fibre reinforced polyurethane and use in car body exterior parts
Matériaux composites de polyuréthane renforcé par des fibres et leur utilisation dans des pièces extérieures au chassis d'automobiles

(30) Priorität: 27.04.2001 DE 10120912
(43) Veröffentlichungstag der Anmeldung: 30.10.2002
(73) Patentinhaber: BASF AKTIENGESELLSCHAFT, 67056 Ludwigshafen (DE)
(72) Erfinder: Partusch, Georg, 86932 Pürgen (DE); Bauer, Michael, 80339 München (DE); Fader, Michael, 82140 Olching (DE); Pöltl, Jörg, 85221 Dachau (DE); Templin, Markus, Dr., 49448 Lemförde (DE); Fritz, Ralf, Dr., 86926 Greifenberg (DE); Schneider, Jürgen, 82275 Emmering (DE); Weidemann, Astrid, 82216 Überacker (DE)

(56) Entgegenhaltungen:
- EP-A- 0 425 240
- DE-A- 19 829 859
- US-A- 4 501 790
- US-A- 6 120 903

## Beschreibung

Die Erfindung betrifft Verbundbauteile, aufgebaut aus einer Schicht i) mit einer lackierfähigen Oberfläche, enthaltend kurzfaserverstärktes Polyurethan, und einer Schicht ii), enthaltend langfaserverstärktes Polyurethan, sowie ein Verfahren zu deren Herstellung und die Verwendung der Verbundbauteile als Karosserieaußenteile.

Verbundbauteile aus Polyurethan (nachfolgend als PUR bezeichnet) sind vielseitige Werkstoffe und werden unter anderem als Karosserieaußenteile eingesetzt, da sie gegenüber den herkömmlichen Bauteilen aus Metall beispielsweise ein geringeres Gewicht aufweisen. An diese Bauteile werden jedoch hohe Anforderungen beispielsweise bezüglich der Steifigkeit und der optischen Oberflächenbeschaffenheit gestellt.

EP-A-995 667, WO 98/29233 und DE-A-197 32 425 beschreiben die Herstellung von Verbundbauteilen, aufgebaut aus einer thermoplastischen Folie, die mit langglasfaserverstärktem Polyurethan hinterschäumt ist. Zur Herstellung von gefärbten Bauteilen wird eine pigmentierte Folie verwendet. Diese Verbundbauteile können jedoch z.Z. nicht mit einer derartigen Oberflächenbeschaffenheit hergestellt werden, die einer hochwertigen Lackierung (Class-A Oberfläche) entspricht, oder insbesondere eine Online-Lackierung, ermöglicht. (Eine normale Lackierung der PFM-Folie ist ohne Probleme möglich, Ziel bei der Verwendung von PFM ist es aber, ohne Lackierung eine A-Class Oberfläche incl. Colourmatching zum Rest des Fahrzeugs zu erreichen).

DE-A-198 29 859 offenbart ein Kunststoffbauteil zur Anwendung im Kfz-Bereich, aufgebaut aus einem "Außenträger", der bevorzugt faserverstärktes Polyurethan enthält und durch das LFI-Verfahren hergestellt wird, und einer "Basisschicht" aus Polyurethan, die eine optisch hochwertige Oberfläche gewährleistet und durch RIModer RRIM-Verfahren aufgebracht wird. Die Kunststoffbauteile sind offline lackierfähig, unter Bedingungen der online-Lackierung kommt es jedoch zum Verzug der Bauteile.

DE-A-198 08 026 beschreibt Bauteile aus Polyurethan (PUR) für den Fahrzeugaußenbereich, wobei in einem ersten Arbeitsschritt ein faserverstärkter PUR Hartschaumkern hergestellt und in einem zweiten Arbeitsschritt mit einer PUR-Kompaktschicht (Coating) übergossen wird, um so die Basis für die durch spätere Lackierung erzeugte Class-A Oberfläche zu erreichen. Diese Bauteile finden beispielsweise als Hardtop für Cabrio-Fahrzeuge Verwendung. Nachteilig bei diesem Verfahren ist der relativ hohe Ausschuss, der durch Fehlstellen beim Aufbringen der Kompaktschicht entsteht. Eine Reparatur der Fehlstellen ist wegen Abzeichnung der Reparaturstellen (Schwundverhalten der Reparaturmasse) nicht möglich. Ein weiterer Nachteil des offenbarten Verfahrens ist, dass die Coatingschicht sehr elastisch und damit weich sein muss, um bei Temperaturschwankungen die unterschiedliche Ausdehnung von Kern und Coatingschicht auszugleichen. Wäre dies nicht der Fall, würde bereits durch Abkühlen der Teile nach der Entformung eine Kurzwelligkeit in der Oberfläche sichtbar, die sich nach dem Lackieren, üblicherweise bei 80-100°C, noch verstärken würde. Eine Onlinelackierung, üblicherweise 1h bei 180°C, ist durch den niedrigen Glaspunkt der elastischen Coatingschicht nicht möglich. Eine weiche Oberfläche birgt jedoch viele Nachteile, beispielsweise ist sie sehr kratzempfindlich.

Aufgabe der vorliegenden Erfindung war es daher, Verbundbauteile aus Polyurethan zur Verwendung als Karosserieaußenteile zur Verfügung zu stellen, welche vorstehend aufgezeigte Nachteile nicht aufweisen. Folglich soll die Erfindung Verbundbauteile bereitstellen, die neben guten mechanischen Eigenschaften wie beispielsweise hohe Steifigkeit und Wärmeformbeständigkeit eine Oberfläche aufweisen, die sowohl lackierfähig, bevorzugt onlinelackierfähig ist, so dass nach der Lackierung eine Class-A-Oberfläche erhalten werden kann, als auch die nötige Härte aufweist, so dass sie möglichst wenig kratzempfindlich ist. Ferner war es Aufgabe der Erfindung ein Verfahren zur Herstellung dieser Verbundbauteile bereitzustellen, das technisch und wirtschaftlich vorteilhaft ist.

Die Aufgaben der vorliegenden Erfindung konnten durch ein Verbundbauteil, umfassend eine Schicht kurzfaserverstärktes PUR mit einer lackierfähigen Oberfläche als Coating und eine Schicht langfaserverstärktes PUR als Träger, und ein Verfahren zur Herstellung dieser Verbundelemente, wobei in einer Form zuerst das Coating und anschließend der Träger eingebracht werden, gelöst werden.

Gegenstand der Erfindung ist daher in Verbundbauteil, aufgebaut aus einer Schicht i) mit einer lackierfähigen Oberfläche, enthaltend kurzfaserverstärktes PUR mit einer mittleren Länge von weniger als 500 µm, und einer Schicht ii), enthaltend langfaserverstärktes Polyurethan, wobei der Unterschied zwischen den linearen Ausdehnungskoeffizienten von Schicht i) und Schicht ii) maximal 30·10⁻⁶/K beträgt.

Außerdem ist Gegenstand der Erfindung ein Verfahren zur Herstellung von Verbundbauteilen, aufgebaut aus einer Schicht i) mit einer lackierfähigen Oberfläche, enthaltend kurzfaserverstärktes PUR, und einer Schicht ii), enthaltend langfaserverstärktes PUR, umfassend folgende Schritte:
A) Einbringen der Schicht i) in eine Form, wobei die lackierfähige Oberfläche der Formwand zugewandt ist und anschließend
B) Aufbringen der Schicht ii) auf Schicht i) mittels LFI-Verfahren und Entformen des Verbundbauteils.

Schließlich ist Gegenstand der Erfindung die Verwendung der erfindungsgemäßen Verbundbauteile zur Herstellung von Karosserieaußenteilen.

Die erfindungsgemäßen Verbundbauteile bestehen aus zwei Schichten. Schicht i) des erfindungsgemäßen Verbundbauteils umfasst kurzglasfaserverstärktes Polyurethan mit einer lackierfähigen Oberfläche und dient als Bezug (Coating), der Schicht ii), umfassend ein langfaserverstärktes Polyurethan, das als Festigkeit verleihender Träger fungiert, auf mindestens einer Seite überzieht.

Unter lackierfähiger Oberfläche wird im Rahmen dieser Erfindung eine Oberfläche verstanden, die eine derartige Beschaffenheit aufweist, dass sie nach einer Lackierung eine optisch hochwertige Oberfläche darstellt. Es dürfen folglich keine Fehlstellen, Abdrücke und/oder Unebenheiten, wie beispielsweise Wellen, erkennbar sein. Bevorzugt wird unter dem Begriff lackierfähig verstanden, dass nach der Lackierung eine Class-A Oberfläche erhalten werden kann.

Unter Class-A Oberfläche versteht man eine Oberfläche, die bei visueller Betrachtung optisch hochwertig erscheint. Bei der Beurteilung der Hochwertigkeit können Lang- und Kurzwelligkeit, Fehlstellen und/oder Glanzgrad berücksichtigt werden.

Eine Class-A Oberfläche weist bevorzugt eine geringe Langwelligkeit auf, d.h. es sind beispielsweise möglichst geringe Extrudermarkierungen zu erkennen, und die Oberfläche weist eine möglichst hohe Spiegelbildtreue auf. Ferner soll eine Class-A Oberfläche eine möglichst geringe Kurzwelligkeit aufweisen, d.h. es soll möglichst kein kurzwelliges Muster, im Stand der Technik bekannt unter dem Begriff "Orangenhaut", erkennbar sein.

Weiterhin weist eine Class-A Oberfläche möglichst wenig Fehlstellen auf. Unter Fehlstellen sind beispielsweise Blasen und Einschlüsse sowie Kratzer zu verstehen, wobei zwischen kleinen und großen Fehlstellen unterschieden werden kann. Kleine Blasen und Einschlüsse haben einen Durchmesser von 0,2 bis 0,5 mm, große Blasen und Einschlüsse haben einen Durchmesser von 0,5 bis 1 mm. Kleine Kratzer weisen eine Tiefe von maximal 0,03 mm und eine Länge von maximal 0,1 mm auf, große Kratzer weisen eine Tiefe von maximal 0,03 mm und eine Länge von maximal 6 mm auf. In einer bevorzugten Ausführungsform weist eine Class-A Oberfläche einen Mindestabstand zwischen zwei großen Fehlstellen von 150 mm auf und/oder es treten nicht mehr als 2 kleine Fehlstellen in einem Radius von 150 mm um eine große Fehlstelle auf und/oder es treten nicht mehr als 4 kleine Fehlstellen in einem Radius von 150 mm um eine kleine Fehlstelle auf.

Eine Class-A Oberfläche soll einen möglichst hohen Glanzgrad aufweisen. In einer bevorzugten Ausführungsform weist die Oberfläche einen Glanzgrad von 80 Glanzgradeinheiten (GLE) bei einem Betrachtungswinkel von 20 ° auf, gemessen nach DIN 67530.

Bevorzugt umfasst der Begriff lackierfähig weiterhin, dass die Oberfläche eine Beschaffenheit aufweist, die es erlaubt, eine Online-Lackierung vorzunehmen. Dazu ist eine Thermoformstabilität von mindestens 1 Stunde bei bis zu 180°C, gegebenenfalls bei bis zu 200°C, des Verbundbauteils und insbesondere der Oberfläche der Schicht i) erforderlich.

Der Begriff Online-Lackierung umfasst den Anbau der Karosserieaussenteile an das sogenannte body in white.(Metallkarosse), welches dann folgende Prozessschritte durchläuft: Grundreinigung-Phosphatierung-Elektrotauchlackierung mit Einbrennen (170°-210°C) -Unterbodenschutz (110-150°C)- Füllerschicht, hart (130-160°C).-Basislack-Klarlack. hart (130-140°C)-Qualitätskontrolle-Endmontage. Bei einer sogenannten Inline-Lackierung wird das separat grundierte Bauteil vor dem Auftrag des Basislacks an die Karosserie montiert. Bei der Offline-Lackierung .wird das vollständig lackierte Bauteil zur Endmontage ans Band gebracht. Die höchste thermische Beanspruchung tritt hierbei beim Einbrennen des Elektrotauchlackes auf. Die Formteile dürfen hierbei nur geringe Dimensionsänderungen sowie nur geringe Änderungen der Materialeigenschaften erfahren.

Die Schicht i), die eine lackierfähige Oberfläche aufweist, soll ferner eine Beschaffenheit aufweisen, so dass sie möglichst unempfindlich gegenüber äußere mechanische Einflüsse wie beispielsweise Stößen und Kratzern ist. Daher weist die Schicht i) bevorzugt eine Härte von 50 Shore D, mehr bevorzugt von 60 Shore D, besonders bevorzugt von 65-70 Shore D, auf.

Das in Schicht i) verwendete Polyurethan ist kurzfaserverstärkt. Unter kurzfaserverstärktem Polyurethan versteht man PUR, das Fasern zur Verstärkung enthält, wobei diese Fasern so beschaffen sind, dass sie über einen herkömmlichen Hochdruckmischkopf verarbeitbar sind. Im allgemeinen weisen die Fasern eine mittlere Länge von weniger als 500 µm, bevorzugt weniger als 250 µm, insbesondere weniger als 160 µm auf.

Ebenfalls fällt im Rahmen dieser Erfindung unter dem Begriff kurzfaserverstärktes Polyurethan ein Polyurethan, das plättchenverstärkt oder mit einem Gemisch aus Fasern und Plättchen verstärkt ist. Für die plättchenförmigen Füllstoffe gelten ähnliche Dimensionen wie vorstehend für die Fasern beschrieben.

Bei den verwendeten Kurzfasern kann es sich um Glasfasern, Mineralfasern, Naturfasern, wie beispielsweise Flachs, Jute oder Sisal, und/oder Kunstfasern, wie beispielsweise Polyamidfasern, Polyesterfaser, Carbonfasern oder Polyurethanfasern handeln. Bei den verwendeten plättchenförmigen Füllstoffen kann es sich um sogenannte Glassflakes oder mineralische Stoffe wie Mica oder Glimmer handeln. Gegebenenfalls können als Kurzfasern auch Füllstoffe, die vorstehend genannte Dimension aufweisen und über einen Hochdruckmischkopf verarbeitbar sind, eingesetzt werden. Bevorzugt verwendet werden Glasfasern oder Mineralfasern.

Alle Füllstoffe sind in der Regel geschlichtet oder ungeschlichtet, d.h. oberflächenmodifiziert, zur Verbesserung der Rieselfähigkeit oder zur Erhöhung der Haftung an die PUR-Matrix.

Die Kurzfasern/Plättchen oder Gemisch werden üblicherweise in einer Menge von 0,1 bis 50 Gew.-%, bevorzugt von 1 bis 25, mehr bevorzugt von 3 bis 20 und besonders bevorzugt von 5-22 Gew.-%, bezogen auf das Gesamtgewicht der Schicht i) eingesetzt.

Die Schicht i) der erfindungsgemäßen Verbundbauteile weist üblicherweise eine Dichte von 0,8 bis 1,5 kg/l, bevorzugt von 0,9 bis 1,3 kg/l auf. Zur Erreichung dieser Dichte werden bevorzugt kompakte Polyurethane oder mikrozellulare Polyurethane eingesetzt. Kompakte Polyurethane sind bevorzugt.

Die Dicke der Schicht i) in den erfindungsgemäßen Verbundbauteilen beträgt üblicherweise 0,1 bis 15 mm, bevorzugt 0,5 bis 5 mm, mehr bevorzugt 0,5 bis 2,5 mm.

Damit die Lackierfähigkeit der Schicht i) bei unterschiedlichen Temperaturen gewährleistet ist, ist eine geringe thermische Ausdehnung wünschenswert. In einer bevorzugten Ausführungsform weist Schicht i) einen linearen Ausdehnungskoeffizienten von 0,1 bis 65, bevorzugt von 1 bis 50, besonders bevorzugt von 10 bis 45 auf.

Unter einer linearen Ausdehnung versteht man die Längenänderung dL, die ein fester Körper, also hier die Schicht i), bei einer Temperaturänderung dT erfährt. Sie wird in erster Näherung durch dL/L = a · dT beschrieben, wobei der linearen Ausdehnungskoeffizienten a in der Größenordnung 10⁻⁶ /K angegeben ist.

Schicht ii) der erfindungsgemäßen Verbundbauteile umfasst langfaserverstärktes Polyurethan und dient als Träger, der dem Verbundbauteil vorteilhafte mechanische Eigenschaften, wie beispielsweise hohe Festigkeit, verleiht.

Unter langfaserverstärktem Polyurethan versteht man PUR, das Fasern zur Verstärkung enthält, wobei diese Fasern so beschaffen sind, dass sie nicht über einen herkömmlichen Hochdruckmischkopf verarbeitbar sind. Die Langfasern können beispielsweise durch das aus dem Stand der Technik bekannte LFI-Verfahren (Long Fiber Injection) in das Polyurethan eingebracht werden und weisen im allgemeinen eine Länge von mehr als 5 mm, bevorzugt von mehr als 10 mm, besonders bevorzugt von 10 mm bis 10 cm auf. Gegebenenfalls ist es auch möglich, die Langfasern in Form von Matten in das Polyurethan einzubringen.

Bei den verwendeten Langfasern kann es sich um Glasfasern, Naturfasern, wie beispielsweise Flachs, Jute oder Sisal, Kunstfasern, wie beispielsweise Polyamidfasern, Polyesterfaser, Carbonfasern oder Polyurethanfasern handeln.

Die Langfasern werden üblicherweise in einer Menge von 0,1 bis 90 Gew.-%, bevorzugt von 1 bis 50, mehr bevorzugt von 5 bis 40 und besonders bevorzugt von 10 bis 30 Gew.-%, bezogen auf das Gesamtgewicht der Schicht ii) eingesetzt.

Die Schicht ii) der erfindungsgemäßen Verbundbauteile weist üblicherweise eine Dichte von 0,1 bis 1,3 kg/l, bevorzugt von 0,2 bis 1,1 kg/l, besonders bevorzugt von 0,3 bis 1,0 kg/l. Zur Erreichung dieser Dichte werden kompakte oder zellige Polyurethane eingesetzt, wobei Polyurethanhartschäume bevorzugt verwendet werden.

Die Dicke der Schicht ii) in den erfindungsgemäßen Verbundbauteilen beträgt üblicherweise 0,1 bis 250 mm, bevorzugt 0,5 bis 100 mm, mehr bevorzugt 1 bis 50 mm, besonders bevorzugt 1 bis 10 mm.

In einer bevorzugten Ausführungsform weist Schicht i) einen linearen Ausdehnungskoeffizienten von 0,1 bis 65, bevorzugt von 1 bis 50, besonders bevorzugt von 20 bis 45 auf, wobei der Ausdehnungskoeffizient a wie vorstehend definiert ist.

Bei den erfindungsgemäßen Verbundbauteilen liegt bevorzugt Haftung zwischen Schicht i) und Schicht ii) vor, d.h. die Adhäsion zwischen den Schichten ist bevorzugt größer als die Kohäsion innerhalb einer Schicht.

Die erfindungsgemäßen Verbundbauteile weisen im allgemeinen eine Wärmeformbeständigkeit bis 180°C, bevorzugt bis 200°C auf. Zur Gewährleistung dieser Wärmeformbeständigkeit ist es vorteilhaft, die Ausdehnungskoeffizienten der Schichten i) und ii) aufeinander abzustimmen. In einer bevorzugten Ausführungsform beträgt die Differenz der thermischen Ausdehnungskoeffizienten der Schichten i) und ii) 0 bis 30, bevorzugt 1 bis 20.

Weiterhin weisen die erfindungsgemäßen Verbundelemente bevorzugt eine Zugfestigkeit nach DIN EN 61 von 10 bis 21 N/mm², ein Zug E-Modul nach DIN EN 61 von 1200 bis 4000, besonders bevorzugt von 1500 bis 3600 N/mm², eine Schlagzähigkeit nach DIN 53453 von 14 bis 90 kJ/m² (bzw. kein Brechen der Probekörper bei Raumtemperatur), ein Biege E-Modul nach DIN EN 63 von 1400 bis 4000 N/mm² und/oder eine Biegefestigkeit nach DIN EN 63 von 30 bis 90 N/mm² auf.

Bei den erfindungsgemäßen Verbundelementen soll kein Verzug bei Temperaturänderungen erfolgen. Daher ist es bevorzugt, dass die Verbundelemente in alle Richtungen (x, u und z-Richtung) eine linearen Ausdehnungskoeffizienten von weniger als 50 · 10⁻⁶/K, bevorzugt von 5 bis 30·10⁻⁶/K aufweisen.

Die erfindungsgemäßen Verbundelemente umfassen Polyurethane. Der Begriff Polyurethane bezieht sich hier auf Polyisocyanat-Polyadditionsprodukte, die durch Umsetzung von a) Polyisocyanaten mit b) mit Isocyanat reaktiven Verbindungen gegebenenfalls in Anwesenheit von c) Treibmittel, d) Katalysatoren und e) Hilfsund Zusatzstoffen erhältlich sind.

Als Isocyanate (a) können allgemein bekannte (cyclo)aliphatische und/oder insbesondere aromatische Polyisocyanate eingesetzt werden. Zur Herstellung der erfindungsgemäßen Verbundelemente eignen sich besonders aromatische Diisocyanate, vorzugsweise Diphenylmethandiisocyanat (MDI) und Toluylendiisocyanat (TDI). Die Isocyanate können in Form der reinen Verbindung oder in modifizierter Form, beispielsweise in Form von Urethdionen, Isocyanuraten, Allophanaten oder Biurethen, vorzugsweise in Form von Urethan- und Isocyanatgruppen enthaltenden Umsetzungsprodukten, sogenannten Isocyanat-Prepolymeren, eingesetzt werden.

Als gegenüber Isocyanaten reaktive Verbindungen (b) kommen Verbindungen in Frage, die zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen. Zweckmäßigerweise werden solche mit einer Funktionalität von 1,8 bis 8, vorzugsweise 2 bis 6, und einem Molekulargewicht von 300 bis 8000, vorzugsweise von 400 bis 4000 verwendet. Bewährt haben sich z.B. Polyether-polyamine und/oder vorzugsweise Polyole, ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Besonders bevorzugt werden Polyetherpolyole eingesetzt, die mindestens 10 % primäre Hydroxylgruppen aufweisen. Die Hydroxylzahl der Polyhydroxylverbindungen beträgt dabei in aller Regel 50 bis 1000. Des weiteren können die Verbindungen (b) in Mischung mit üblichen Kettenverlängerungsund/oder Vernetzungsmitteln verwendet werden.

Als Treibmittel (c) können zur Herstellung von geschäumten Produkten allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind inerte (cyclo)aliphatische Kohlenwasserstoffe mit 4 bis 8 Kohlenstoffatomen, die unter den Bedingungen der Polyurethanbildung verdampfen. Die Menge der eingesetzten Treibmittel richtet sich nach der angestrebten Dichte der Schaumstoffe.

Als Katalysatoren (d) können übliche Verbindungen eingesetzt werden, die die Reaktion der Komponente (a) mit der Komponente (b) beschleunigen. In Frage kommen beispielsweise tertiäre Amine und/oder organische Metallverbindungen. Beispielsweise können als Katalysatoren folgende Verbindungen eingesetzt werden: Triethylendiamin, Aminoalkyl- und/oder Aminophenyl-imidazole, z.B. 4-Chlor-2,5-dimethyl-1-(N-methylaminoethyl)-imidazol, 2-Aminopropyl-4,5-dimethoxy-1-methylimidazol, 1-Aminopropyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol, Zinn-(II)salze von organischen Carbonsäuren, z.B. Zinn-(II)-diacetat, Zinn-(II)-dioctoat, Zinn-(II)-diethylhexoat und Zinn-(II)-dilaurat und Dialkylzinn-(IV)-salzen von organischen Carbonsäuren, z.B. Dibutyl-zinndiacetat, Dibutylzinn-dilaurat, Dibutylzinn-maleat und Dioctylzinn-diacetat.

Die Umsetzung erfolgt gegebenenfalls in Anwesenheit von (e) Hilfs- und/oder Zusatzstoffen, wie z.B. Zellreglern, Trennmittel, Pigmente, oberflächenaktiven Verbindungen und/oder Stabilisatoren gegen oxidativen, thermischen oder mikrobiellen Abbau oder Alterung.

Die Herstellung der erfindungsgemäßen Verbundbauteile erfolgt bevorzugt gemäß nachstehendem Verfahren.

In einem ersten Schritt A) wird in eine Form die Schicht i) des Verbundbauteils durch das bekannte RIM-Verfahren (Reaction Injection Molding) eingebracht. Die Oberfläche, welche die lackierfähige Oberfläche des späteren Verbundbauteils darstellt, ist der Formwand zugewandt.

Nach dem Aushärten der Schicht i) wird in einem zweiten Schritt B) die Schicht ii) durch das bekannte LFI-Verfahren auf die Schicht i) aufgebracht, d.h. das in der Form liegende Coating (Schicht i) wird mit langfaserverstärktem PUR hinterschäumt. Eine kurze Beschreibung des LFI-Verfahren befindet sich beispielsweise in EP-A-995 667. Nach dem Aushärten der Schicht ii) wird das Verbundbauteil entformt.

In einer bevorzugten Ausführungsform wird erfolgen die Schritte A) und B) in der gleichen Form, wobei nach Schritt A) der Deckel der Form gewechselt wird, so dass Schicht ii) in die gleiche Form eingebracht werden kann.

Zur Erhöhung der Adhäsion zwischen den Schichten i) und ii) kann Schicht i) vor dem Hinterschäumen vorbehandelt werden, beispielsweise durch Auftragen eines Primers, durch Flammbehandlung oder mechanische Aufrauhung oder Bestrahlung mit Licht (Wellenlänge der Strahlung kleiner 800 nm) oder Partikeln (Sandstrahlen). Diese Vorbehandlung ist jedoch optional.

In einer bevorzugten Ausführungsform umfasst das Verfahren einen weiteren Schritt C), wobei das entformte Bauteil lackiert wird. Bevorzugt erfolgt die Lackierung in Form einer Önline-Lackierung, da dies technisch und wirtschaftlich vorteilhaft ist. In einer besonders bevorzugten Form weist das in Schritt C) erhaltene Verbundbauteil eine Class-A Oberfläche auf.

Zur Herstellung der erfindungsgemäßen Produkte können die Isocyanate (a) und die gegenüber Isocyanaten reaktiven Verbindungen (b) in solchen Mengen zur Umsetzung gebracht, daß das Äquivalenzverhältnis von NCO-Gruppen von (a) zur Summe der reaktiven Wasserstoffatome von (b) bevorzugt 0,90 bis 1,5:1, besonders bevorzugt 1 bis 1,2:1 beträgt.

Die Produkte werden üblicherweise nach dem bekannten one-shot oder dem ebenfalls bekannten Prepolymerverfahren hergestellt.

Die Umsetzung des Reaktionsgemisches mittels RIM-Verfahren kann in üblichen, bevorzugt temperierbaren, offenen oder verschließbaren, Formen durchgeführt werden. Insbesondere bei der Herstellung von möglichst glatten Produkten werden als Formwerkzeuge bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche dieser Form kann beispielsweise durch Polieren behandelt werden.

Als Formwerkzeuge zur Herstellung der Produkte können übliche und kommerziell erhältliche Werkzeuge eingesetzt werden, deren Oberfläche beispielsweise aus Stahl, Aluminium, Emaille, Teflon, Epoxyharz oder einem anderen polymeren Werkstoff besteht,
wobei die Oberfläche gegebenenfalls verchromt, beispielsweise hartverchromt sein kann. Bevorzugt sollten die Formwerkzeuge temperierbar, um die bevorzugten Temperaturen einstellen zu können, verschließbar und bevorzugt zur Ausübung eines Druckes auf das Produkt ausgerüstet sein.

Die Umsetzung zu den Polyisocyanat-Polyadditionsprodukten erfolgt üblicherweise bei einer Formtemperatur von 30 bis 80°C und einer Temperatur der Ausgangskomponenten von bevorzugt 18 bis 65°C für eine Dauer von üblicherweise 0,5 bis 10 min, bevorzugt 0,5 bis 5 min.

Die erfindungsgemäßen Verbundbauteile weisen entsprechend ihrem bevorzugten Einsatz als flächige Formteile, beispielsweise als Ersatz für metallische Bleche, bevorzugt eine flächige Struktur auf. Die Produkte besitzen eine Dicke von 1 bis 500 mm, bevorzugt von 5 bis 50 mm.

Die erfindungsgemäßen Verbundbauteile finden vorzugsweise Verwendung als Bauteile im Fahrzeug-, Flugzeug- oder Immobilienbau, bevorzugt als Karosseriebauteile für Kraftfahrzeuge, insbesondere als Dächer, Türen, Motorhauben, Kofferraumdeckel, Endkantenklappen, Stoßstangen und Hardtops.

Die erfindungsgemäßen Verbundbauteile weisen den Vorteil auf, dass sie das Erfordernis von guten mechanischen Eigenschaften wie Zugfestigkeit, Schlagfestigkeit und Biegefestigkeit mit dem Erfordernis einer lackierfähigen Oberfläche vereinen.

Das in dieser Erfindung beanspruchte Verfahren zur Herstellung dieser Verbundbauteile zeichnet sich durch eine hohe Wirtschaftlichkeit aus. Im Vergleich zum aus DE-A-198 08 026 bekannten Verfahren bilden sich hier deutlich weniger Fehlstellen bei der Herstellung der Schicht i), die beispielsweise im Verfahren des Stands d. Technik durch Luftblasen, die nicht komplett aus der Form entwichen sind, hervorgerufen werden können. Selbst wenn es bei der Herstellung der Schicht i) zu Fehlstellen kommen sollte, so tritt im vorliegenden Verfahren weniger Verlust verglichen mit dem in DE-A-198 08 026 offenbarten Verfahren auf, da dort in diesem Fall sowohl Schicht i) als auch Schicht ii) verworfen werden müssten.

Die vorliegende Erfindung soll durch nachfolgendes Beispiel veranschaulicht werden.

### Beispiel

Beschrieben wird ein Verfahren zur Herstellung von glasfaserverstärkten Musterplatten, die durch eine Deckschicht (= Schicht i)) aus füllstoffverstärktem (= kurzfaserverstärktem), kompaktem PUR eine sogenannte Class A Oberfläche, wie sie von vielen Automobilherstellern für Exterieurbauteile gefordert wird, erhält.

### 1. Schritt: Herstellung der Deckschicht aus kompaktem, mit Mineralstoff gefülltem Polyurethan (PUR)

An einer Musterplattenform (Werkstoff: Stahl, Maße: (500x400x2) mm (Länge x Breite x Höhe) ist über einen Fächeranguss ein Mischkopf für die Vermischung von PUR-Komponenten im sog. One-Shot-Verfahren fest angeflanscht. Die Musterplattenform wird mit Hilfe einer Warmwasserheizung auf 60 °C thermostatisiert. Die Oberfläche der Form ist poliert. Die flüssigen PUR-Komponenten (Materialname: Elastolit® K 4900/1/LT/CN) A (Polyolmischung + Additive) und B (Isocyanat) werden mit Hilfe einer Hochdruckdosieranlage (Firmenbezeichnung: Puromat® SV 20) im Mischkopf vermischt, über den Fächeranguss in das geschlossene Werkzeug injiziert (RRIM-Verfahren), wobei es in der Form zur Vernetzungsreaktion von A und B zu festem, nicht geschäumten (kompaktem) PUR kommt. Nach 5 Minuten wird die Deckschicht entformt.

Die Musterplatte weist eine Dichte von 1150 kg/m³ auf. Da in der A-Komponente zusätzlich ein Füllstoff (Bezeichnung: Muskovit-Glimmer, Mica W160) enthalten ist, besitzt die Deckschicht folgende mechanische Eigenschaften:
Biegefestigkeit: 80 N/mm²,
Biege-E-Modul: 3450 N/mm².

Dieser plättchenförmige Füllstoff verleiht dem ausgehärtetem PUR außerdem unidirektionale Schwund- und Wärmeausdehnungseigenschaften. Weil die polierte Oberfläche des Werkzeugs direkt durch das aushärtende PUR abgebildet wird, besitzt die Oberfläche der Deckschichten eine sog. Class-A-fähige Oberfläche, die ohne Vorbehandlung lackiert werden kann, wobei die hohe Wärmeformbeständigkeit (HDT/B: 105 °C) einen weiteren Vorteil darstellt.

Durch den Einsatz von internen Trennmitteln wird die Oberfläche des Werkzeugs nur am Anfang (1. bis 5. Entformung) mit Trennwachs durch Sprühen beschichtet. Anschließend muss nach jeder folgenden Entformung die Formoberfläche poliert werden, um den Trennvorgang ohne externer Trennmittel zu erleichtern.

### 2. Schritt: Verstärken der Deckschicht mit Glasfasern und zelligem PUR-Schaum

Um die mechanische Festigkeit der Deckschicht zu erhöhen, wird diese in einem zweiten Arbeitsschritt mit Hilfe des sogenannten LFI®-Verfahren (Kraus-Maffei) verstärkt (= Schicht ii), langfaserverstärktes Polyurethan). Dabei wird zuerst die von Stauboder Schmutzpartikel gereinigte Deckschicht aus Schritt 1 in die Kavität des Musterplattenwerkzeugs (Material: Aluminium, Maße: (1000x500x8) mm; durch eine Warmwasserheizung auf 55 °C am Formoberteil, und 35 °C am Formunterteil thermostatisiert) eingelegt. Auf diese Deckschicht wird nun das PUR-/Glasfasergemisch (geschnittene Glasfasern: Länge: 25 mm, die mit flüssigem PUR-Reaktionsgemisch benetzt sind, Firmenbezeichnung des PUR: Elastoflex® E 3509) mit Hilfe einer für dieses Verfahren entwickelten Anlage (LFI-PUR®, Krauss Maffei GmbH) im offenen Werkzeug aufgetragen. Durch anschließendes Schließen der Form und Aufschäumen des zelligen PUR-Gemischs entsteht auf der o.g. Deckschicht eine 6 mm starke glasfaserverstärkte PUR-Schaumschicht, die durch ihren zelligen Aufbau eine Dichte von 600 kg/m³ aufweist. Nach 200 Sekunden wird das Verbundbauteil (Deckschicht i) + Verstärkungsschicht ii)) entformt. Durch den Glasfaseranteil (10 %) in der Verstärkungsschicht erhält das gesamte Verbundbauteil folgende mechanische Eigenschaften:
Biegefestigkeit: 65 N/mm²
Biege-E-Modul: 2650 N/mm²
Dichte des Verbundbauteils: 880 kg/m³.

Die Oberfläche des entformten Bauteils kann ohne Vorbehandlung mit handelsüblichen Lacken versiegelt werden.

## Patentansprüche

1. Verbundbauteil, aufgebaut aus einer Schicht i) mit einer lakkierfähigen Oberfläche, enthaltend kurzfaserverstärktes Polyurethan mit einer mittleren Länge von weniger als 500 µm, und einer Schicht ii), enthaltend langfaserverstärktes Polyurethan, wobei der Unterschied zwischen den linearen Ausdehnungskoeffizienten von Schicht i) und Schicht ii) maximal 30·10⁻⁶/K beträgt.

2. Verbundbauteil nach Anspruch 1, **dadurch gekennzeichnet, dass** das Verbundbauteil einen linearen Ausdehnungskoeffizienten von maximal 50·10⁻⁶/K aufweist.

3. Verbundbauteil nach Anspruch 1 oder 2, **dadurch gekennzeichnet, dass** Schicht i) eine Härte von mindestens 50 Shore D aufweist.

4. Verbundbauteil nach einem der Ansprüche 1 bis 3, **dadurch gekennzeichnet, dass** die lackierfähige Oberfläche der Schicht i) lackiert ist und eine Class-A Oberfläche aufweist.

5. Verfahren zur Herstellung von Verbundbauteilen, aufgebaut aus einer Schicht i) mit einer lackierfähigen Oberfläche, enthaltend kurzfaserverstärktes Polyurethan, und einer Schicht ii), enthaltend langfaserverstärktes Polyurethan, umfassend folgende Schritte:
A) Einbringen der Schicht i) in eine Form, wobei die lackierfähige Oberfläche der Formwand zugewandt ist und anschließend
B) Aufbringen der Schicht ii) auf Schicht i) mittels LFI-Verfahren und Entformen des Verbundbauteils.

6. Verfahren nach Anspruch 5, **dadurch gekennzeichnet, dass** es zusätzlich den Schritt C) Lackierung der Schicht i), bevorzugt Online-Lackierung der Schicht i), umfasst.

7. Verfahren nach Anspruch 6, **dadurch gekennzeichnet, dass** durch die Lackierung eine Class-A Oberfläche erzielt wird.

8. Verwendung der Verbundbauteile nach einem der Ansprüche 1 bis 4 zur Herstellung von Karosserieaußenteilen.

## Claims

1. A composite component constructed of a layer i) having a paintable surface and comprising short fiber reinforced polyurethane having an average length of less than 500 µm, and a layer ii) comprising long fiber reinforced polyurethane where the difference between the linear expansion coefficients of layer i) and layer ii) is not more than 30·10⁻⁶/K.

2. A component as claimed in claim 1, having a linear expansion coefficient of not more than 50·10⁻⁶/K.

3. A component as claimed in claim 1 or 2, wherein layer i) has a hardness of at least 50 Shore D.

4. A component as claimed in any of claims 1 to 3, wherein the paintable surface of the layer i) is painted and has a class A surface.

5. A process for producing a composite component constructed of a layer i) having a paintable surface and comprising short fiber reinforced polyurethane and a layer ii) comprising long fiber reinforced polyurethane, comprising the following steps:
A) introducing layer i) into a mold, with the paintable surface facing the mold wall, and then
B) applying layer ii) to layer i) by the LFI technique, and demolding the component.

6. A process as claimed in claim 5, further comprising the step C) of painting the layer i), preferably online.

7. A process as claimed in claim 6, wherein said painting produces a class A surface.

8. The use of a component as claimed in any of claims 1 to 4 to produce exterior bodywork parts.

## Revendications

1. Élément composite constitué par une couche i) comprenant une surface apte au laquage, contenant du polyuréthane renforcé avec de courtes fibres possédant une longueur moyenne inférieure à 500 µm, et par une couche ii) contenant du polyuréthane renforcé avec de longues fibres, la différence maximale entre le coefficient de dilatation linéaire de la couche i) et celui de la couche ii) s'élevant à 30·10⁻⁶/K.

2. Élément composite selon la revendication 1, **caractérisé en ce que** l'élément composite présente un coefficient maximal de dilatation linéaire s'élevant à 50·10⁻⁶/K.

3. Élément composite selon la revendication 1 ou 2, **caractérisé en ce que** la couche i) présente une dureté d'au moins 50 Shore D.

4. Élément composite selon l'une quelconque des revendications 1 à 3, **caractérisé en ce que** la surface apte au laquage de la couche i) est une surface laquée et présente une surface de classe A.

5. Procédé pour la fabrication d'éléments composites constitués par une couche i) comprenant une surface apte au laquage, contenant du polyuréthane renforcé avec de courtes fibres et par une couche ii) contenant du polyuréthane renforcé avec de longues fibres, comprenant les étapes suivantes consistant à :
A) introduire la couche i) dans un moule, la surface apte au laquage étant tournée vers la paroi du moule, et ensuite
B) appliquer la couche ii) sur la couche i) à l'aide du procédé LFI et démouler l'élément composite.

6. Procédé selon la revendication 5, **caractérisé en ce qu'**il comprend en outre l'étape C) de laquage de la couche i), de préférence de laquage en ligne de la couche i).

7. Procédé selon la revendication 6, **caractérisé en ce qu'**on obtient, via le laquage, une surface de classe A.

8. Utilisation des éléments composites selon l'une quelconque des revendications 1 à 4 pour la fabrication de pièces externes de carrosserie.
